(19) Europäisches Patentamt
European Patent Office
Office européen des brevets

(11) EP 3 525 321 A1

(12) EUROPÄISCHE PATENTANMELDUNG

(43) Veröffentlichungstag:
**14.08.2019 Patentblatt 2019/33**

(21) Anmeldenummer: **18156033.5**

(22) Anmeldetag: **09.02.2018**

(51) Int Cl.:
***H02K 1/27*** *(2006.01)* ***H02K 21/16*** *(2006.01)*
***H02K 15/03*** *(2006.01)* *H02K 29/03 (2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder: **Potoradi, Detlef**
**97616 Bad Neustadt/Saale (Mühlbach) (DE)**

# (54) PERMANENTERREGTE SYNCHRONMASCHINE MIT REDUZIERTEM PENDELDREHMOMENT

(57) Die Erfindung betrifft eine permanenterregte Synchronmaschine (10) mit einem Stator und einem Rotor, auf dem Permanentmagnete (4) mit einer Polbedeckung (ap) in Umfangsrichtung und mit einer Schrägung bezogen auf eine Maschinenachse (3) der permanenterregten Synchronmaschine (10) angeordnet sind. Die Polbedeckung (ap) und die Schrägung sind derart dimensioniert, dass sich Pendeldrehmomente, die durch die fünfte und siebte Oberwelle jeweils eines Statorfelds und eines Rotorfelds hervorgerufen werden, gegenseitig reduzieren bzw. kompensieren. Die Schrägung bezüglich der Maschinenachse (3) weist einen Schrägungswinkel ($\alpha S$) in Umfangsrichtung im Bereich von 10° bis 20°, vorzugsweise von 14° bis 16°, auf, die Polbedeckung (ap) liegt im Bereich von 75% bis 90%, vorzugsweise von 80% bis 86%. Die besten Ergebnisse bezüglich des Pendeldrehmoments werden mit einem Schrägungswinkel ($\alpha S$) von 15° und einer Polbedeckung (ap) von 84% erreicht.

FIG 3

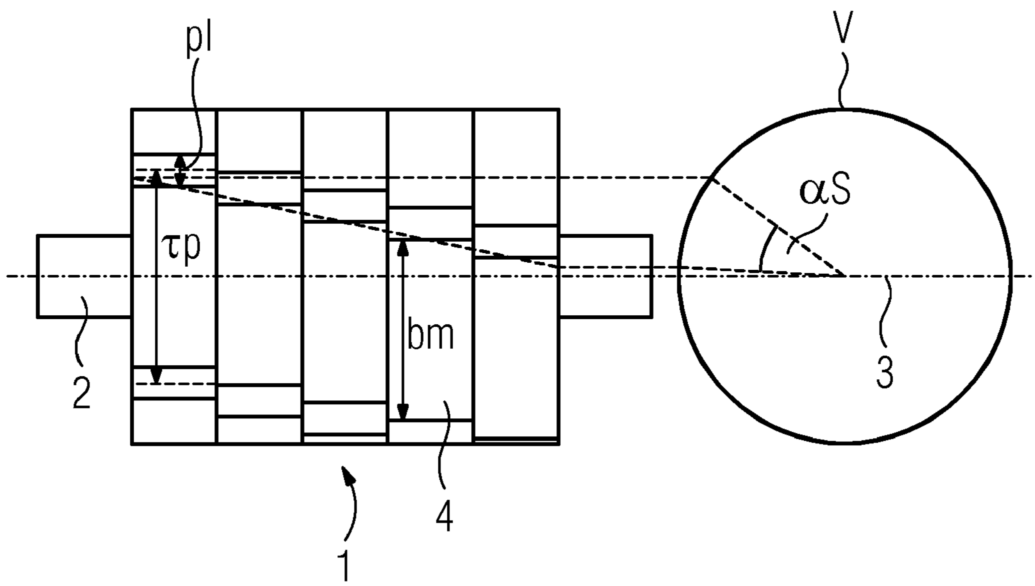


EP 3 525 321 A1

**Beschreibung**

Die Erfindung betrifft eine permanenterregte Synchronmaschine, die für einen Dreiphasen-Betrieb ausgelegt ist, mit einem Stator und einem Rotor, auf dem Permanentmagnete mit einer Polbedeckung in Umfangsrichtung und mit einer Schrägung bezogen auf eine Maschinenachse der permanenterregten Synchronmaschine angeordnet sind, wobei die Polbedeckung und die Schrägung derart dimensioniert sind, dass sich Pendeldrehmomente, die durch die fünfte und siebte Oberwelle jeweils eines Statorfelds und eines Rotorfelds hervorgerufen werden, gegenseitig reduzieren.

Eine Drehmomentwelligkeit einer permanenterregten Synchronmaschine ist bei Belastung der permanenterregten Synchronmaschine ein wichtiges Merkmal. Die Drehmomentwelligkeit wird hauptsächlich durch Oberwellen der gleichen Ordnungszahl in Magnetfeldern des Rotors und des Stators hervorgerufen und führt dazu, dass ein von der permanenterregten Synchronmaschine bereitgestelltes Drehmoment ein Pendeldrehmoment aufweist.

Besonders die fünfte und die siebte Oberwelle haben massiven Einfluss auf die Drehmomentwelligkeit.

Die Patentschrift EP 2139100 A1 offenbart eine permanentmagneterregte Synchronmaschine, die für einen Dreiphasen-Betrieb ausgelegt ist, mit einem Stator, bei dem jeder Zahn von einer Wicklung umgeben ist, und der eine Lochzahl q = 1/2 besitzt, und einem Rotor, auf dem Permanentmagnete mit einer Pollücke in Umfangsrichtung und mit einer Schrägung bezogen auf die axiale Richtung angeordnet sind, wobei die Pollücke und die Schrägung derart dimensioniert sind, dass sich Pendeldrehmomente, die durch die fünfte und siebte Oberwelle jeweils des Statorfelds und des Rotorfelds hervorgerufen werden, gegenseitig reduzieren. Die Schrägung weist bei axialer Projektion einen Schrägungswinkel in Umfangsrichtung bezogen auf die Polteilung von 40 % bis 57,2 % auf. Die Pollücke liegt bezogen auf die Polteilung im Bereich von 20 % bis 42,9 %.

Der in der genannten Patenschrift offenbarte Schrägungswinkel wirkt sich hinsichtlich seiner Größe jedoch nachteilig auf ein Nutzdrehmoment der permanenterregten Synchronmaschine aus.

Der Erfindung liegt die Aufgabe zugrunde, Pendeldrehmomente einer permanenterregten Synchronmaschine zu reduzieren und gleichzeitig ein hohes Nutzdrehmoment bereitzustellen.

Die Lösung der Aufgabe gelingt durch die Merkmale des Anspruchs 1, d. h. eine permanenterregte Synchronmaschine, die für einen Dreiphasen-Betrieb ausgelegt ist, mit einem Stator und einem Rotor, auf dem Permanentmagnete mit einer Polbedeckung in Umfangsrichtung und mit einer Schrägung bezogen auf eine Maschinenachse der permanenterregten Synchronmaschine angeordnet sind, wobei die Polbedeckung und die Schrägung derart dimensioniert sind, dass sich Pendeldrehmomente, die durch die fünfte und siebte Oberwelle jeweils eines Statorfelds und eines Rotorfelds hervorgerufen werden, gegenseitig reduzieren, wobei die Schrägung bezüglich der Maschinenachse einen Schrägungswinkel in Umfangsrichtung im Bereich von 10° bis 20°, vorzugsweise von 14° bis 16°, aufweist, wobei die Polbedeckung im Bereich von 75% bis 90%, vorzugsweise von 80% bis 86%, liegt.

Permanenterregte Synchronmaschinen umfassen einen Stator und einen Rotor. Um eine Permanenterregung zu erreichen, umfasst der Rotor ein Rotorpaket, vorzugsweise in Form eines Blechpakets, sowie Permanentmagnete. Die Permanentmagnete sind vorzugsweise auf dem Rotorpaket angeordnet und übertragen das Drehmoment auf eine an dem Rotor befestigte Welle. Permanenterregte Synchronmaschinen, insbesondere Servomotoren, werden in vielen Gebieten eingesetzt. Hierzu zählen Industrieanlagen, Werkzeugmaschinen, Fahrzeugantriebe oder auch Industrieroboter. Sie weisen eine hohe Leistungsdichte und einen hohen Wirkungsgrad auf. Zudem sind permanenterregte Synchronmaschinen wartungsarm.

Die Erfindung eignet sich besonders gut für Servomotoren, da Servomotoren vorzugsweise als permanenterregte Synchronmotoren ausgeführt sind und vorzugsweise ausgeprägte Pole und Pollücken aufweisen. Anwendungen, in welchen Servomotoren eingesetzt werden, reagieren empfindlich auf Drehzahlschwankungen bzw. Pendeldrehmomente.

Durch die Erfindung können Pendeldrehmomente einer permanenterregten Synchronmaschine reduziert und gleichzeitig ein hohes Nutzdrehmoment bereitgestellt werden. Eine hohe Polbedeckung und ein geringer Schrägungswinkel ermöglichen ein hohes Nutzdrehmoment.

In einer vorteilhaften Ausführungsform der Erfindung weist der Stator der permanenterregten Synchronmaschine als Wicklungssystem eine Zahnspulenwicklung auf.

Sogenannte Zahnspulenwicklungen umfassen Einzelspulen mit einer Spulenweite, die vorzugsweise einer Nutteilung entspricht. Die Einzelspulen umfassen genau einen Zahn. Sie werden daher als Zahnspulen bezeichnet.

Eine Zahnspulenwicklung weist eine sehr kurze Wickelkopflänge auf, was bezüglich einer kompakten Bauweise der Synchronmaschine vorteilhaft ist. Sie ermöglicht zudem eine höhere Nutfüllung als bei anderen Wicklungssystemen, was bezüglich einer Leistungsdichte der Synchronmaschine vorteilhaft ist. Ferner wird keine Phasentrennung im Nutbereich benötigt, was sich positiv auf Fertigungskosten der Synchronmaschine auswirkt. Eine modulare und automatisierte Fertigung, die bei Zahnspulenwicklungen möglich ist, sowie eine einfache Wickeltechnik wirken zudem kostensenkend.

Durch die Zahnspulenwicklung ist ein Widerstand eines Wicklungsstrangs außerdem deutlich verringert, wodurch Stromwärmeverluste geringer sind. Die Synchronmaschine ist dadurch äußerst energieeffizient.

Die Zahnspulenwicklung wird bevorzugt bei Servomotoren oder auch Torquemotoren eingesetzt.

Es sind jedoch auch andere Wicklungsarten - z. B. eine verteilte Wicklung - möglich.

In einer weiteren vorteilhaften Ausführungsform der Erfindung sind die Polbedeckung und die Schrägung derart dimensioniert, dass sich Pendeldrehmomente, die durch die fünfte und siebte Oberwelle jeweils des Statorfelds und des Rotorfelds hervorgerufen werden, im Wesentlichen kompensieren.

Die fünfte und die siebte Oberwelle werden hierbei nicht einzeln für sich reduziert bzw. kompensiert. Vielmehr wird eine Phasenlage der fünften Oberwelle und siebten Oberwelle zueinander betrachtet und mittels des erfindungsgemäßen Schrägungswinkels und der Polbedeckung erreicht, dass eine resultierende Drehmomentpendelung aus der fünften und siebten Oberwelle gleich null oder zumindest nahezu null ist.

Die resultierende Drehmomentwelligkeit kann dadurch auf ein Minimum reduziert werden.

In einer weiteren vorteilhaften Ausführungsform der Erfindung sind die Permanentmagnete zur Ausbildung der Schrägung in Umfangsrichtung gestaffelt angeordnet.

Schräg ausgeführte Magnete sind teuer und müssen meist für jede Rotorlänge und den gewünschten Schrägungswinkel gesondert gefertigt werden. Die gestaffelte Anordnung der Permanentmagnete ist kostengünstiger, unter anderem weil Magnete vorgefertigt werden können. Auch die Fertigung des Rotors gelingt leichter.

Vorzugsweise sind die Permanentmagnete rund um den Rotor angeordnet und als außenliegende Magnete ausgeführt. Diese Art der Magnetanordnung erlaubt eine leichte und kostengünstige Fertigung des Rotors.

Jedoch ist auch eine Einbettung der Permanentmagnete - auch als innenliegende Magnete bekannt - in den Rotor möglich, wenn sehr hohe Drehzahlen erforderlich sind.

In einer weiteren vorteilhaften Ausführungsform der Erfindung sind die Permanentmagnete als Plättchen-, Ring-, Brotlaib- oder Schalenmagnete ausgeführt. Die Permanentmagnete können auch als randabgesenkte Schalenmagnete oder als Magnete konstanter Höhe mit am Rand vergrößertem Luftspalt ausgeführt sein. Ferner sind auch andere Magnetformen möglich.

Als Permanentmagnete eignen sich besonders gut Hochenergiemagnete, vorzugsweise Legierungen aus Neodym-Eisen-Bohr oder Samarium-Kobalt. Hochenergiemagnete werden bei elektrischen Synchronmaschinen bevorzugt, da dadurch eine kompakte Anordnung der elektrischen Maschine bewerkstelligt werden kann. Jedoch können auch Ferritmagnete eingesetzt werden. Bei gleicher Bauart weist eine permanenterregte Synchronmaschine mit Ferritmagneten aber ein geringeres Drehmoment auf als eine permanenterregte Synchronmaschine mit Hochenergiemagneten.

In einer weiteren vorteilhaften Ausführungsform der Erfindung ist auf dem Rotor ein magnetisierbares Material, vorzugsweise im Wesentlichen parallel zur Maschinenachse, aufgebracht, wobei zur Ausbildung eines Permanentmagneten das magnetisierbare Material mit dem Schrägungswinkel schräg aufmagnetisiert ist.

In einer weiteren vorteilhaften Ausführungsform der Erfindung weist die Schrägung bezüglich der Maschinenachse einen Schrägungswinkel in Umfangsrichtung von 15° auf.

In einer weiteren vorteilhaften Ausführungsform der Erfindung liegt die Polbedeckung bei 84%.

In einer weiteren vorteilhaften Ausführungsform der Erfindung weist die permanenterregte Synchronmaschine eine Lochzahl q von 1/2, eine Statornutzahl Q von 12 und eine Polzahl 2p von 8 auf.

Im Folgenden wird die Erfindung anhand der in den Figuren dargestellten Ausführungsbeispiele näher beschrieben und erläutert. Es zeigen:

FIG 1 eine Ausgestaltung eines Rotors einer permanenterregten Synchronmaschine,

FIG 2 einen Ausschnitt aus FIG 1 mit Blick in Richtung der Maschinenachse,

FIG 3 eine Ausgestaltung des Rotors mit gestaffelt und geschrägt angeordneten Permanentmagneten,

FIG 4 eine Ausgestaltung des Rotors, auf welchem magnetisierbares Material aufgebracht ist,

FIG 5 ein Diagramm, das die Drehmomentwelligkeit, die durch die fünfte und siebte Oberwelle erzeugt wird, in Abhängigkeit des Schrägungswinkels und der Polbedeckung darstellt,

FIG 6 ein Diagramm, das die Drehmomentwelligkeit , die durch die fünfte und siebte Oberwelle erzeugt wird, in Abhängigkeit des Schrägungswinkels und der Polbedeckung darstellt,

FIG 7 ein Diagramm, das ebenso die Drehmomentwelligkeit , die durch die fünfte und siebte Oberwelle erzeugt wird, darstellt, jedoch in Abhängigkeit des Verhältnisses von Schrägungswinkel zu Polteilung und des Verhältnisses von Pollücke zu Polteilung,

FIG 8 eine Ausgestaltung der permanenterregten Synchronmaschine.

FIG 1 zeigt eine Ausgestaltung eines Rotors 1 einer permanenterregten Synchronmaschine. Der Rotor weist eine Welle 2 entlang einer Maschinenachse 3 auf. Der Rotor 1 umfasst ferner Permanentmagnete 4, die auf einem Rotorpaket, vorzugsweise auf einem Blechpaket 5, angeordnet sind. Die Permanentmagnete 4 sind bezüglich eines Pols gestaffelt und mit einer Schrägung mit einem Schrägungswinkel $\alpha S$ angeordnet. Eine Polbedeckung und die Schrägung sind derart dimensioniert, dass sich Pendeldrehmomente, die durch eine fünfte und siebte Oberwelle jeweils eines Statorfelds und eines Rotorfelds hervorgerufen werden, gegenseitig reduzieren bzw. sogar kompensieren.

FIG 2 zeigt einen Ausschnitt aus FIG 1 mit Blick in Richtung der Maschinenachse 3. Die Figur zeigt die Welle 2 sowie auf dem Blechpaket 5 angeordnete Permanentmagnete 4. Ein durch den Permanentmagnet 4 ausgebildeter Pol weist die Polbreite bm und die Polteilung $\tau p$ auf.

Es gilt vorzugsweise: $ap = \frac{bm}{\tau p}$ mit Polbedeckung ap, Polbreite bm und Polteilung $\tau p$.

Ferner zeigt die Figur eine Pollücke pl.

FIG 3 zeigt eine Ausgestaltung des Rotors 1 mit gestaffelt und geschrägt angeordneten Permanentmagneten 4. Die Welle 2 ist entlang der Maschinenachse 3 angeordnet. Die Figur zeigt die Pollücke pl, die Polbreite bm und die Polteilung $\tau p$.

Die Figur zeigt zudem den Schrägungswinkel $\alpha S$. Beim Blick in Richtung der Maschinenachse 3 ist dieser bezüglich einer Vorderansicht V abgebildet.

Der Schrägungswinkel $\alpha S$ liegt im Bereich zwischen 10° und 20°, vorzugsweise zwischen 14° und 16°. Die Polbedeckung ap liegt im Bereich von 75% bis 90%, vorzugsweise von 80% bis 86%. Die besten Ergebnisse bezüglich einer Drehmomentwelligkeit der permanenterregten Synchronmaschine werden mit einem Schrägungswinkel $\alpha S$ von 15° und einer Polbedeckung ap von 82,5% erreicht.

FIG 4 zeigt eine Ausgestaltung des Rotors 1, auf welchem magnetisierbares Material 6 aufgebracht ist. Das magnetisierbare Material 6 wurde schräg mit einem Schrägungswinkel $\alpha S$ aufmagnetisiert, wodurch der Permanentmagnet 41 geschaffen wurde.

Beim Blick in Richtung der Maschinenachse 3 ist der Schrägungswinkel $\alpha S$ bezüglich einer Vorderansicht V abgebildet.

Die Figur zeigt die Welle 2 entlang der Maschinenachse 3. Die Polbreite bm ist von einem vorderen axialen Ende des Rotors 1 bis zu einem hinteren axialen Ende des Rotors 1 gleich. Jedoch kann die Polbreite bm an verschiedenen Stellen des Rotors 1 auch verscheiden breit sein.

FIG 5 und FIG 6 zeigen Diagramme, die die Drehmomentwelligkeit, die durch die fünfte und siebte Oberwelle erzeugt wird, in Abhängigkeit des Schrägungswinkels $\alpha S$ und der Polbedeckung ap darstellen.

Ein Bereich A zeigt den Stand der Technik der weiter oben genannten Patentschrift EP 2139100 A1 mit einem Schrägungswinkel $\alpha S$ von 18° bis 25,74° und einer Polbedeckung ap von 57,1% bis 80%.

Ein Bereich B zeigt die Drehmomentwelligkeit bei einem Schrägungswinkel $\alpha S$ von 14° bis 16° und einer Polbedeckung ap von 80% bis 86%. Besonders durch FIG 6 wird ersichtlich, dass im Bereich B eine deutlich geringere Drehmomentwelligkeit auftritt. FIG 6 zeigt hierfür die Drehmomentwelligkeit dm in Prozent bezogen auf ein Nutzdrehmoment.

FIG 7 zeigt ein Diagramm, das ebenso die Drehmomentwelligkeit, die durch die fünfte und siebte Oberwelle erzeugt wird, darstellt, jedoch in Abhängigkeit des Verhältnisses von Schrägungswinkel $\alpha S$ zu Polteilung $\tau p$ und des Verhältnisses von Pollücke pl zu Polteilung $\tau p$.

Auch hier werden der Stand der Technik (Bereich A) und die im Rahmen dieser Erfindung offenbarten Werte (Bereich B) gegenübergestellt.

FIG 8 zeigt eine Ausgestaltung der permanenterregten Synchronmaschine 10. Diese umfasst einen Stator mit Zähnen 11 und Wicklungen 12 sowie einen Rotor ringsum die Welle 2. Der Rotor weist ein Blechpaket 5 sowie Permanentmagnete 4 auf.

## Patentansprüche

**1.** Permanenterregte Synchronmaschine (10), die für einen Dreiphasen-Betrieb ausgelegt ist, mit

- einem Stator und
- einem Rotor, auf dem Permanentmagnete (4) mit einer Polbedeckung (ap) in Umfangsrichtung und mit einer Schrägung bezogen auf eine Maschinenachse (3) der permanenterregten Synchronmaschine (10) angeordnet sind,

wobei die Polbedeckung (ap) und die Schrägung derart dimensioniert sind, dass sich Pendeldrehmomente, die durch die fünfte und siebte Oberwelle jeweils eines Statorfelds und eines Rotorfelds hervorgerufen werden, gegenseitig reduzieren, **dadurch gekennzeichnet, dass** die Schrägung bezüglich der Maschinenachse (3) einen Schrägungswinkel ($\alpha S$) in Umfangsrichtung im Bereich von 10° bis 20°, vorzugsweise von 14° bis 16°, aufweist, wobei die Polbedeckung (ap) im Bereich von 75% bis 90%, vorzugsweise von 80% bis 86%, liegt.

**2.** Permanenterregte Synchronmaschine (10) nach Anspruch 1, wobei der Stator der permanenterregten Synchronmaschine (10) als Wicklungssystem eine Zahnspulenwicklung aufweist.

**3.** Permanenterregte Synchronmaschine (10) nach einem der Ansprüche 1 oder 2, wobei die Polbedeckung (ap) und die Schrägung derart dimensioniert sind, dass sich Pendeldrehmomente, die durch die fünfte und siebte Oberwelle jeweils des Statorfelds und des Rotorfelds hervorgerufen werden, im Wesentlichen kompensieren.

**4.** Permanenterregte Synchronmaschine (10) nach einem der Ansprüche 1 bis 3, wobei die Permanentmagnete (4) zur Ausbildung der Schrägung in Umfangsrichtung gestaffelt angeordnet sind.

**5.** Permanenterregte Synchronmaschine (10) nach einem der Ansprüche 1 oder 3, wobei auf dem Rotor ein magnetisierbares Material (6), vorzugsweise im Wesentlichen parallel zur Maschinenachse (3), aufgebracht ist, wobei zur Ausbildung eines Permanentmagneten (41) das magnetisierbare Material (6) mit dem Schrägungswinkel ($\alpha$S) schräg aufmagnetisiert ist.

**6.** Permanenterregte Synchronmaschine (10) nach einem der Ansprüche 1 bis 5, wobei die Schrägung bezüglich der Maschinenachse (3) einen Schrägungswinkel ($\alpha$S) in Umfangsrichtung von 15° aufweist.

**7.** Permanenterregte Synchronmaschine (10) nach einem der Ansprüche 1 bis 6, wobei die Polbedeckung (ap) bei 84% liegt.

**8.** Permanenterregte Synchronmaschine (10) nach einem der Ansprüche 1 bis 7, wobei die permanenterregte Synchronmaschine (10) eine Lochzahl q von 1/2, eine Statornutzahl Q von 12 und eine Polzahl 2p von 8 aufweist.

FIG 1

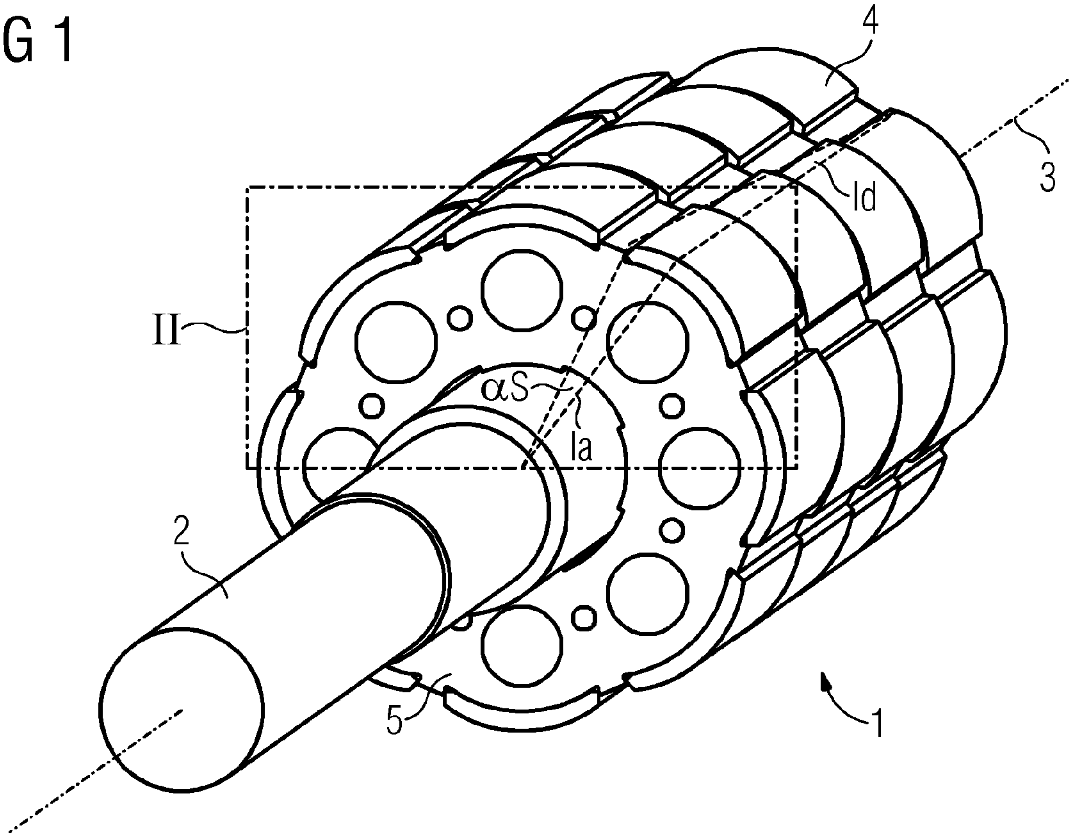


FIG 2

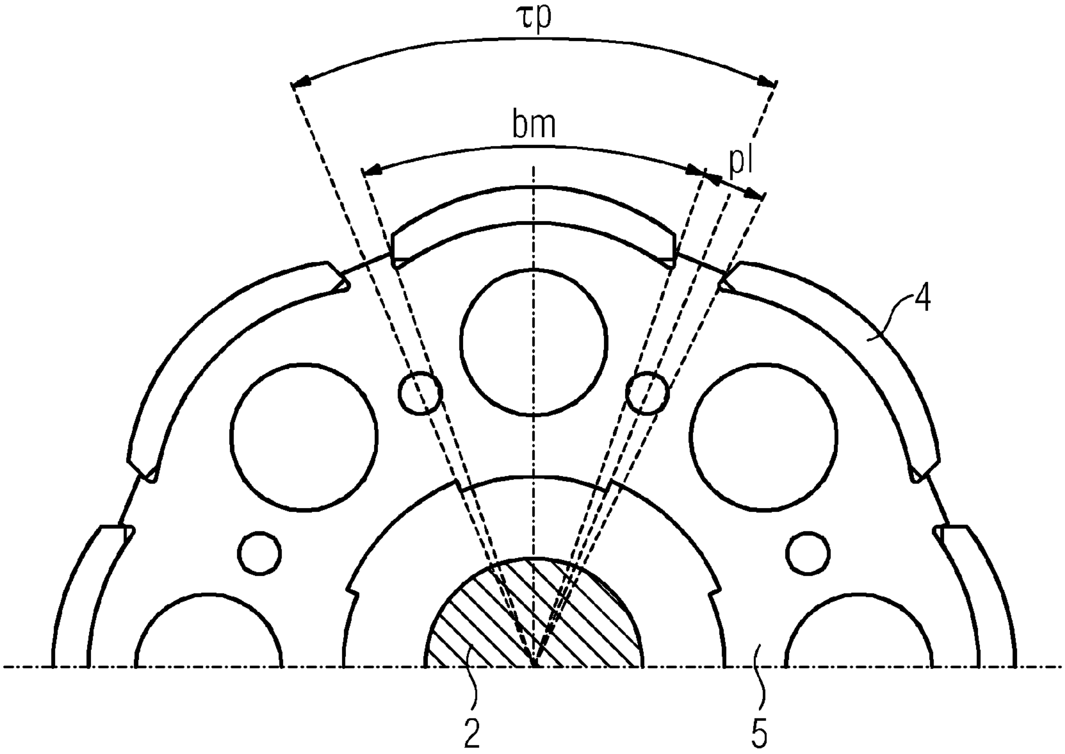

FIG 3

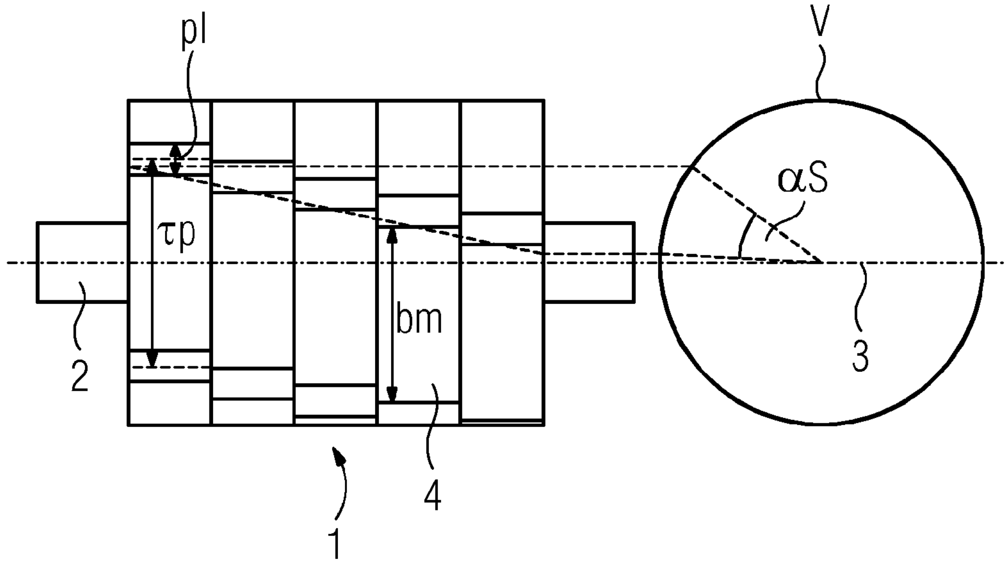


FIG 4

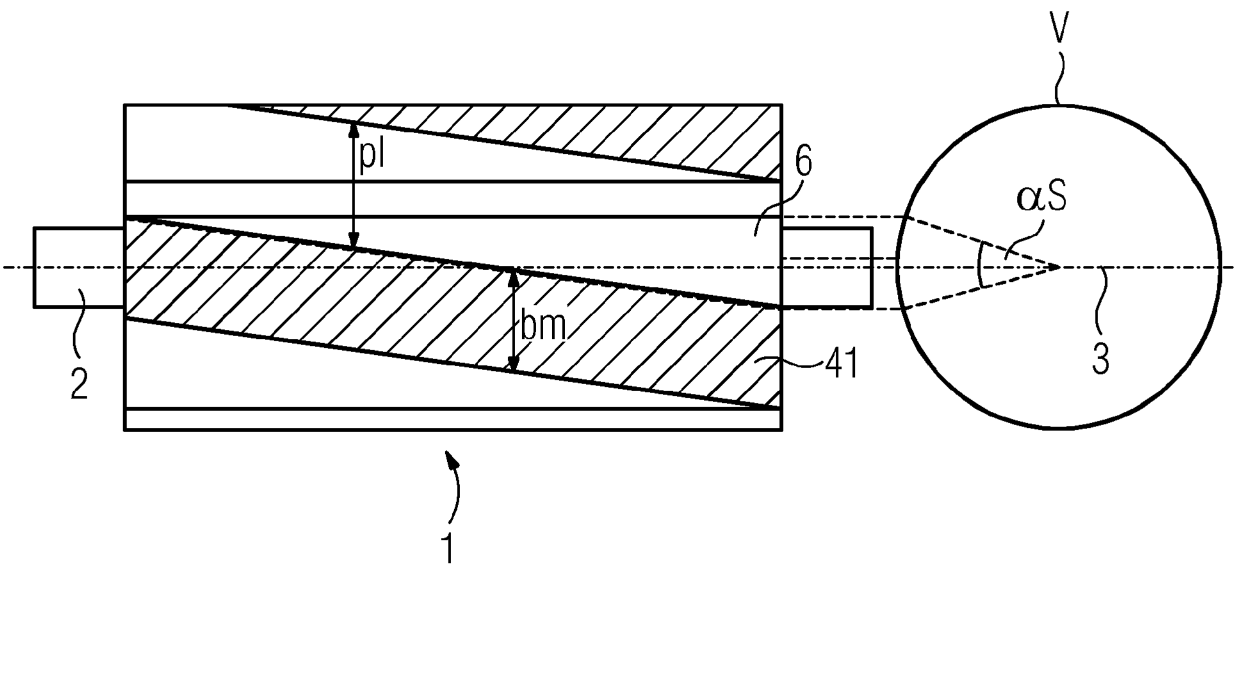

FIG 5

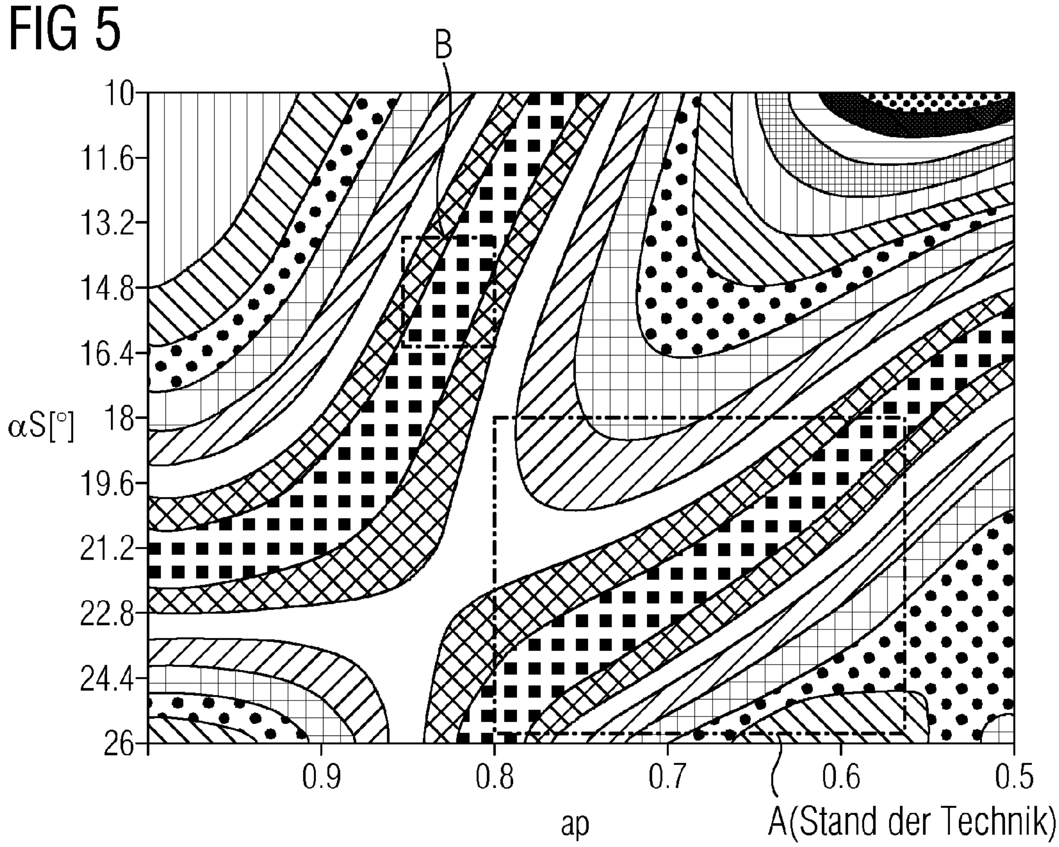
B
10
11.6
13.2
14.8
16.4
αS[°]
18
19.6
21.2
22.8
24.4
26
0.9
0.8
0.7
0.6
0.5
ap
A(Stand der Technik)

FIG 6

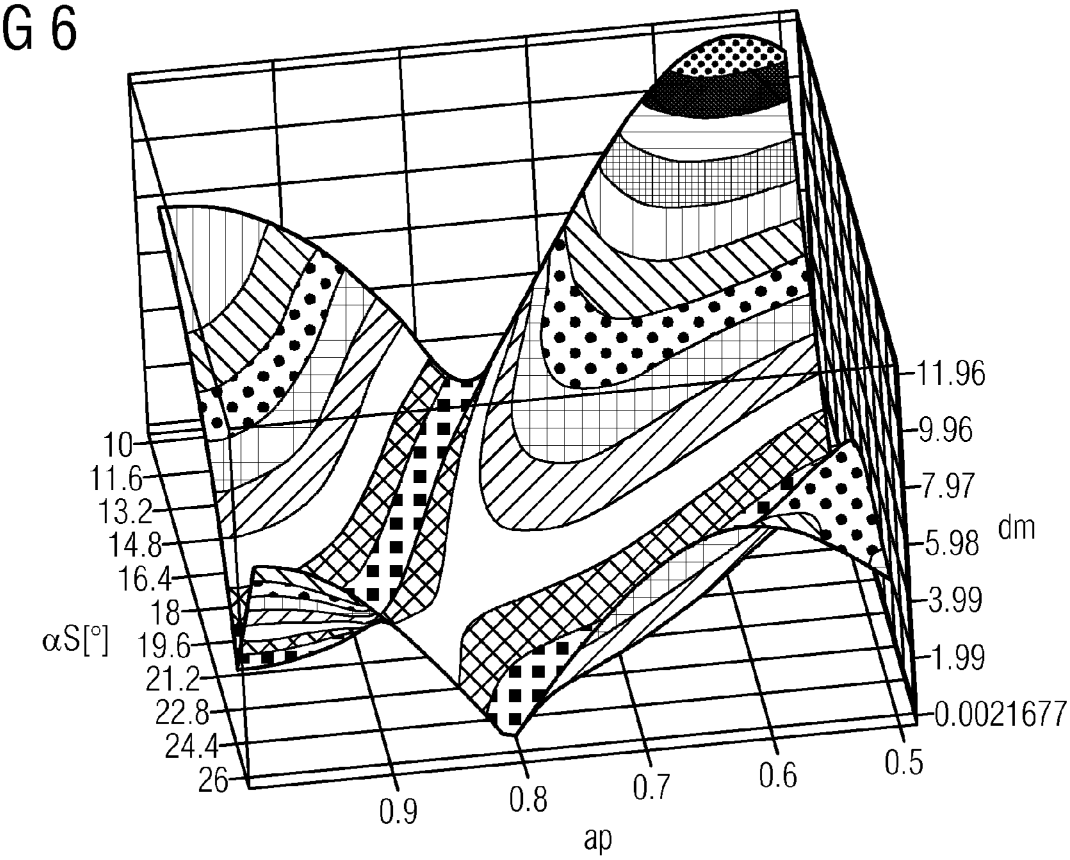
10
11.6
13.2
14.8
16.4
18
αS[°]
19.6
21.2
22.8
24.4
26
0.9
0.8
0.7
0.6
0.5
ap
11.96
9.96
7.97
dm
5.98
3.99
1.99
0.0021677

FIG 7

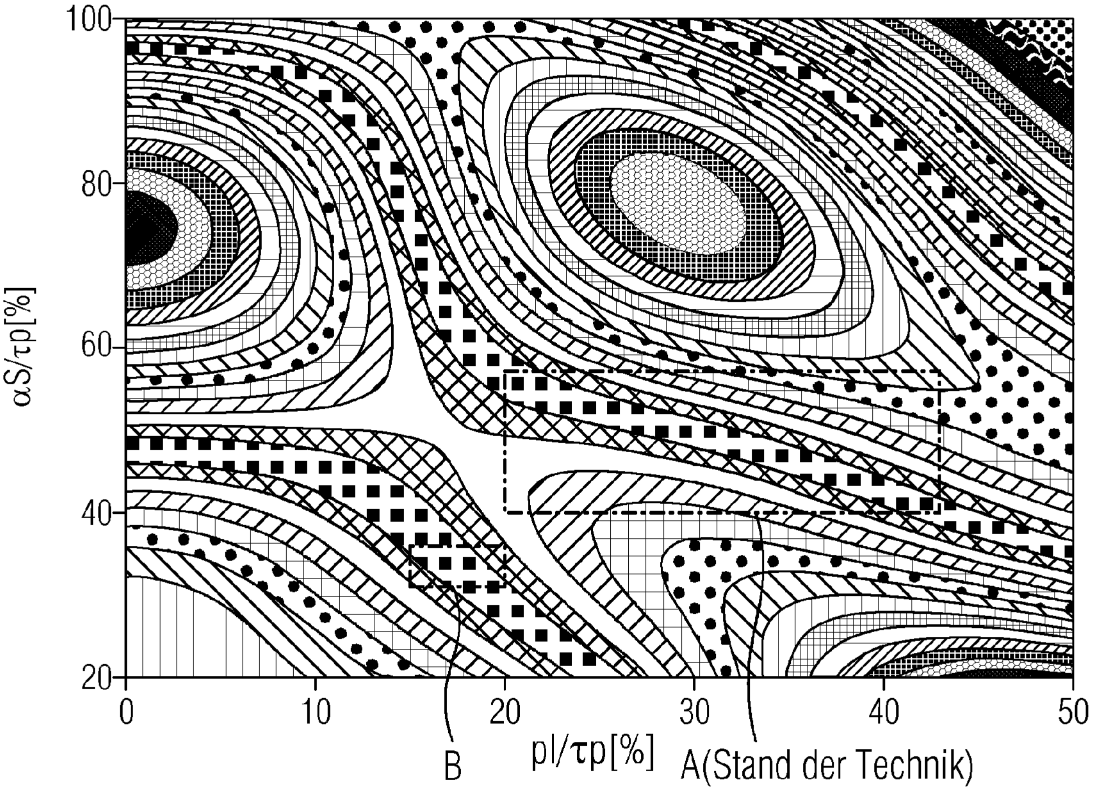
100
80
60
40
20
αS/τp[%]
0
10
20
30
40
50
pl/τp[%]
B
A(Stand der Technik)

FIG 8

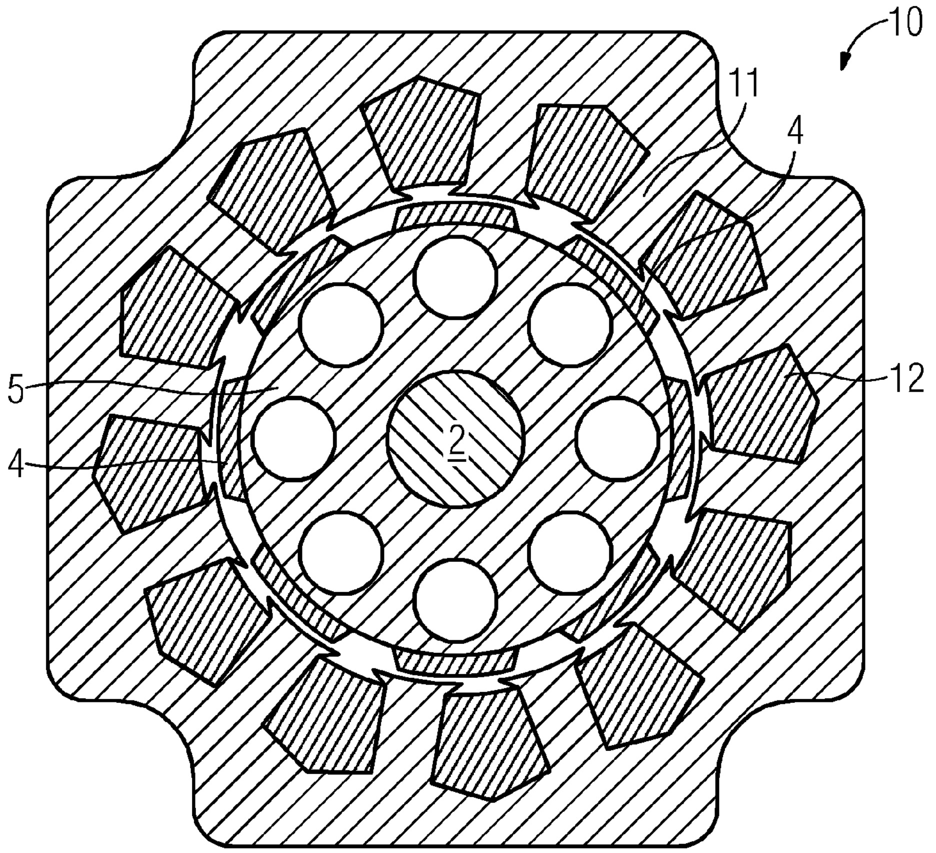
10
11
4
5
4
2
12

Europäisches Patentamt
European Patent Office
Office européen des brevets

# EUROPÄISCHER RECHERCHENBERICHT

Nummer der Anmeldung
EP 18 15 6033

| Kategorie | EINSCHLÄGIGE DOKUMENTE Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/101126 A1 (CRAPO ALAN D [US] ET AL) 1. August 2002 (2002-08-01) * Absätze [0005] - [0006], [0040]; Abbildungen 1-6a * ----- | 1-8 | INV. H02K1/27 H02K21/16 H02K15/03 |
| X | US 2002/047431 A1 (FUKUSHIMA TETSUHARU [JP]) 25. April 2002 (2002-04-25) * Absatz [016-]; Abbildungen 1-7 * ----- | 1-8 | ADD. H02K29/03 |
| X | WO 2004/109894 A1 (SIEMENS AG [DE]; POTORADI DETLEF [DE]) 16. Dezember 2004 (2004-12-16) * Seite 3, Zeile 7 - Seite 4, Zeile 33; Ansprüche 1-5; Abbildungen 1-3 * ----- | 1-8 | |
| X | DE 103 48 401 A1 (MITSUBISHI ELECTRIC CORP [JP]) 19. Mai 2004 (2004-05-19) * Absätze [0045] - [0053]; Abbildungen 1-21 * ----- | 1-4,6,8 | |
| X | EP 1 389 821 A1 (DAIDO STEEL CO LTD [JP]) 18. Februar 2004 (2004-02-18) * Absätze [0036] - [0046], [0051] - [0054]; Ansprüche 1-9; Abbildungen 1-14 * ----- | 1-8 | RECHERCHIERTE SACHGEBIETE (IPC) H02K |
| X | US 2010/244611 A1 (AKUTSU SATORU [JP] ET AL) 30. September 2010 (2010-09-30) * Absätze [0035], [0042], [0048] - [0049], [0061]; Abbildungen 1-18 * ----- | 1-3,5 | |
| X | EP 1 257 039 A2 (DELPHI TECH INC [US]) 13. November 2002 (2002-11-13) * Absätze [0001], [0010] - [0014]; Abbildungen 1-6 * ----- -/-- | 1-8 | |

Der vorliegende Recherchenbericht wurde für alle Patentansprüche erstellt

2

| Recherchenort | Abschlußdatum der Recherche | Prüfer |
|---|---|---|
| Den Haag | 20. Juni 2018 | Maître, Jérôme |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
&: Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 18 15 6033

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 968 081 A1 (JTEKT CORP [JP]) 10. September 2008 (2008-09-10) * Absätze [0010], [0028], [0051]; Abbildungen 1-8 * ----- | 1-8 | |
| X | ZHU Z Q ET AL: "Influence of Design Parameters on Cogging Torque in Permanent Magnet Machines", IEEE TRANSACTIONS ON ENERGY CONVERSION, IEEE SERVICE CENTER, PISCATAWAY, NJ, US, Bd. 15, Nr. 4, 1. Dezember 2000 (2000-12-01), XP011015601, ISSN: 0885-8969 * das ganze Dokument * ----- | 1-8 | |
| X | SANG-MOON HWANG ET AL: "Various Design Techniques to Reduce Cogging Torque by Controlling Energy Variation in Permanent Magnet Motors", IEEE TRANSACTIONS ON MAGNETICS, IEEE SERVICE CENTER, NEW YORK, NY, US, Bd. 37, Nr. 4, 1. Juli 2001 (2001-07-01), XP011033509, ISSN: 0018-9464 * das ganze Dokument * ----- | 1-8 | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| Den Haag | 20. Juni 2018 | Maître, Jérôme |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 15 6033

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2018

| Im Recherchenbericht angeführtes Patentdokument | Datum der Veröffentlichung | Mitglied(er) der Patentfamilie | Datum der Veröffentlichung |
|---|---|---|---|
| US 2002101126 A1 | 01-08-2002 | AU 2002237967 A1 | 12-08-2002 |
| | | CN 1489821 A | 14-04-2004 |
| | | EP 1356574 A2 | 29-10-2003 |
| | | US 2002101126 A1 | 01-08-2002 |
| | | US 2003201137 A1 | 30-10-2003 |
| | | WO 02060740 A2 | 08-08-2002 |
| US 2002047431 A1 | 25-04-2002 | JP 2001314050 A | 09-11-2001 |
| | | US 2002047431 A1 | 25-04-2002 |
| WO 2004109894 A1 | 16-12-2004 | DE 10326167 A1 | 05-01-2005 |
| | | JP 4480720 B2 | 16-06-2010 |
| | | JP 2006527578 A | 30-11-2006 |
| | | US 2007170802 A1 | 26-07-2007 |
| | | WO 2004109894 A1 | 16-12-2004 |
| DE 10348401 A1 | 19-05-2004 | CN 1497818 A | 19-05-2004 |
| | | DE 10348401 A1 | 19-05-2004 |
| | | US 2004124728 A1 | 01-07-2004 |
| | | US 2006192456 A1 | 31-08-2006 |
| EP 1389821 A1 | 18-02-2004 | DE 60302116 D1 | 08-12-2005 |
| | | DE 60302116 T2 | 27-07-2006 |
| | | EP 1389821 A1 | 18-02-2004 |
| | | US 2004084985 A1 | 06-05-2004 |
| US 2010244611 A1 | 30-09-2010 | DE 102009038268 A1 | 07-10-2010 |
| | | FR 2943860 A1 | 01-10-2010 |
| | | JP 4698745 B2 | 08-06-2011 |
| | | JP 2010226935 A | 07-10-2010 |
| | | US 2010244611 A1 | 30-09-2010 |
| EP 1257039 A2 | 13-11-2002 | EP 1257039 A2 | 13-11-2002 |
| | | JP 2002374643 A | 26-12-2002 |
| | | US 2002167241 A1 | 14-11-2002 |
| EP 1968081 A1 | 10-09-2008 | EP 1968081 A1 | 10-09-2008 |
| | | JP 2008228390 A | 25-09-2008 |
| | | US 2008218023 A1 | 11-09-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2139100 A1